# DEMANDE DE BREVET EUROPEEN

(11) **EP 1 489 357 A1**
(43) Date de publication de la demande: **22.12.2004**
(21) Numéro de dépôt: 03447157.3
(22) Date de dépôt: 20.06.2003
(51) Int. Cl.: F23N 5/20, G05D 23/19, F24D 19/10

(54) **Appareil de chauffage à combustible liquide et télécommandé**

(71) Demandeur: Thermic Investments S.A., 2419 Luxembourg (LU)
(72) Inventeur: Cyris, Rudy, B-5660 Couvin (BE)
(74) Mandataire: Van Malderen, Michel

(57) **Abrégé**

La présente invention se rapporte à un dispositif de contrôle, commande et/ou programmation d'un appareil de chauffage à vaporisation de combustible liquide (1,2), dont le débit de l'arrivée dudit combustible est réglé via une cuve à niveau constant (6) muni d'un organe doseur de débit actionnable, ledit dispositif intégrant un thermostat, caractérisé en ce que le dispositif comprend des moyens (3,4,5) permettant à un utilisateur situé à distance dudit appareil de mesurer la température d'ambiance à cet endroit, commander et/ou programmer ledit appareil.

## Description

### Objet de l'invention

La présente invention se rapporte à un dispositif de contrôle ou commande thermostatique pour un brûleur à vaporisation utilisant un combustible de type hydrocarbure liquide tel que fioul domestique (désigné ci-après par le synonyme "mazout"), kérosène, pétrole ou huile, de sorte que ledit contrôle thermostatique puisse être réalisé à distance par l'utilisateur.

L'invention se rapporte également à un appareil de chauffage individuel ou central à combustible liquide comprenant le dispositif de contrôle susmentionné.

Le domaine d'application de l'invention est plus particulièrement celui des appareils à fioul domestique (ou mazout) présentant un brûleur à vaporisation alimenté par une cuve à niveau constant avec tige doseuse, appelée souvent improprement "carburateur".

### Arrière-plan technologique et état de la technique

Il est connu que, dans les brûleurs à combustible liquide tel que le mazout, ce dernier est stocké dans un réservoir et arrive dans l'appareil où il sera vaporisé et brûlé, via une cuve à niveau constant.

Dans un foyer à combustible liquide, ce dispositif permet d'assurer un débit régulier dans le brûleur. La cuve à niveau constant est munie d'un flotteur qui actionne une tige doseuse, c'est-à-dire une tige percée d'un orifice calibré dont la taille dépend du type de combustible liquide utilisé (kérosène, mazout, ...) et du débit souhaité.

Généralement, un bouton de commande gradué permet à l'utilisateur de régler le débit de combustible qui arrive à l'intérieur du brûleur et, de ce fait même, la puissance de fonctionnement de l'appareil.

Pour l'allumage de l'appareil, il est connu de devoir utiliser une source extérieure de chaleur afin d'enflammer les premières gouttes de combustible. Par la suite, la chaleur dégagée est suffisante pour gazéifier et enflammer le combustible entrant.

On sait que cette combustion est optimisée par l'usage d'un catalyseur qui, lorsque l'appareil est en régime, rougeoie et chauffe les parois du brûleur ainsi que le combustible jusqu'à sa gazéification.

L'air comburant nécessaire pénètre dans le brûleur, grâce au tirage de la cheminée, via des trous calibrés.

Actuellement, on connaît un dispositif de commande thermostatique des appareils à mazout avec brûleur à gazéification. Toutefois, ce dispositif est placé directement sur la cuve à niveau constant. La sonde de température utilisée communément est un bulbe utilisé comme élément sensible et relié au mécanisme de commande via un capillaire.

Le principe de fonctionnement en est le suivant : le liquide contenu dans le bulbe se dilate sous l'effet de la chaleur et agit sur un poussoir mécanique à ressort qui fait monter ou descendre la tige doseuse. Vu le lien capillaire entre la sonde et le carburateur, cette sonde n'est jamais placée très loin de l'appareil. Elle ne peut donc généralement pas percevoir la température au droit de l'utilisateur. Le mécanisme de commande de la sonde est muni d'un bouton qui permet à l'utilisateur de fixer manuellement une puissance maximale. Le fonctionnement de l'appareil est dès lors rendu semi-thermostatique. En effet, dans ce cas, le débit varie d'une valeur minimale fixe à la valeur maximale choisie et ce, même si la température extérieure est très basse.

Ce type de commande semi-thermostatique ne permet donc pas de réguler le fonctionnement du brûleur de façon adaptée ou souple aux conditions de température régnant dans l'environnement où se trouve l'appareil de chauffage. De plus, ce dispositif n'offre aucune programmation temporelle et donc aucun confort à l'utilisateur. En corollaire, ce dispositif ne s'inscrit évidemment pas dans le contexte actuel d'utilisation rationnelle de l'énergie.

### Buts de l'invention

La présente invention vise à fournir une solution qui ne présente pas les inconvénients de l'état de la technique.

L'invention vise à accroître le confort d'utilisation et la rationalisation de la consommation d'énergie pour les appareils de chauffage individuels à combustible liquide.

En particulier, l'invention a pour but de proposer un appareil de chauffage individuel à combustible liquide présentant une thermostatisation réelle et complète.

L'invention a encore pour but de proposer un appareil de chauffage individuel à combustible liquide dont la thermostatisation peut être réglée ou programmée à distance par l'utilisateur.

### Principaux éléments caractéristiques de l'invention

La présente invention se rapporte à un dispositif de contrôle, commande et/ou programmation d'un appareil de chauffage à vaporisation de combustible liquide, dont le débit de l'arrivée dudit combustible est réglé via une cuve à niveau constant muni d'un organe doseur de débit actionnable, ledit dispositif intégrant un thermostat, caractérisé en ce que le dispositif comprend des moyens permettant à un utilisateur situé à distance dudit appareil de mesurer la température d'ambiance à cet endroit, commander et/ou programmer ledit appareil.

Selon l'invention, lesdits moyens sont au moins partiellement portables.

Avantageusement, le thermostat est un thermostat électronique couplé à un programmateur numérique également intégré au dispositif et capable d'imposer à l'appareil de chauffage différents régimes de fonctionnement en fonction d'une base de temps.

De manière particulièrement avantageuse, le dispositif de l'invention comprend un boîtier-télécommande sans fil muni d'un thermostat et d'un programmateur numérique.

De préférence, le boîtier-télécommande comporte un affichage, par exemple à cristaux liquides ou électroluminescent, capable d'afficher des valeurs de température.

Selon une première modalité d'exécution préférée de l'invention, le boîtier-télécommande comprend un transducteur émetteur d'ultrasons coopérant avec un transducteur récepteur d'ultrasons, intégré à l'appareil de chauffage et couplé à un moteur pas à pas, capable à son tour d'actionner l'organe doseur de la cuve à niveau constant.

Selon une deuxième modalité d'exécution préférée de l'invention, le boîtier-télécommande comprend un transducteur émetteur d'infrarouges coopérant avec un transducteur récepteur d'infrarouges, intégré à l'appareil de chauffage et couplé à un moteur pas à pas, capable à son tour d'actionner l'organe doseur de la cuve à niveau constant.

L'invention concerne également un appareil de chauffage à vaporisation de combustible liquide, dont le débit de l'arrivée de combustible est réglé via une cuve à niveau constant muni d'un organe doseur actionnable, caractérisé en ce qu'il comporte un dispositif de contrôle, commande et/ou programmation tel que décrit ci-dessus.

### Brève description des figures

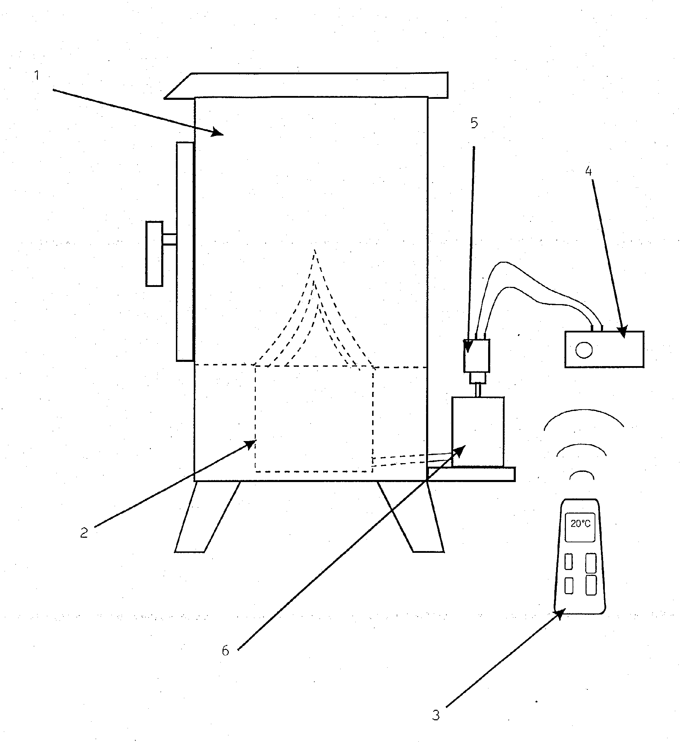

La figure 1 représente schématiquement un appareil de chauffage à combustible liquide muni de son dispositif de contrôle thermostatique selon la présente invention.

### Description d'une forme d'exécution préférée de l'invention

La présente invention a pour objet de proposer un appareil de chauffage et/ou cuisson à combustible liquide 1, tel que représenté à la figure 1, comprenant un brûleur à vaporisation 2 et présentant un organe ayant une fonction thermostatique complète et qui, de plus, peut être commandé à distance par l'utilisateur.

Ainsi, selon l'invention, l'appareil de chauffage 1 est commandé à distance via une télécommande sans fil 3, par exemple à ultrasons ou à infrarouges, l'appareil de chauffage lui-même comprenant un récepteur 4 couplé à un moteur pas à pas 5 qui actionne le bouton de commande de la cuve à niveau constant 6.

La télécommande 3 est pourvue d'un capteur thermostatique électronique qui perçoit la température à l'endroit où ladite télécommande se trouve, donc au droit de l'utilisateur et non sur l'appareil lui-même. A l'opposé, les dispositifs de l'état de la technique, tels que la sonde à bulbe décrite ci-dessus, se placent à même la cuve à niveau constant donc à proximité immédiate de la combustion, c'est-à-dire en définitive au niveau de l'appareil.

Selon l'invention, la fonction thermostatique est complète. En effet, plus il fait froid dans la pièce où se trouve la télécommande, plus le dispositif va augmenter le débit de combustible et donc la puissance de l'appareil, tout en restant dans les limites de puissance dudit appareil.

Avantageusement, la télécommande 3 étant munie d'un indicateur de température, par exemple tel qu'un affichage à cristaux liquides, l'utilisateur a la possibilité de régler directement la température de consigne à la valeur désirée. Il ne doit plus régler un bouton sur un "chiffre" qui n'est parlant pour lui en tant que tel. En outre, une fois la température réglée, l'utilisateur n'est plus tenu d'intervenir sur son appareil.

Avantageusement, la télécommande 3 peut également être munie d'un programmateur qui permet de programmer les différents régimes de fonctionnement disponibles.

On entend par programmation, une séquence d'instructions encodables électroniquement qui permet l'arrêt ou la mise en route du chauffage en fonction d'une base de température donnée et en fonction d'une base de temps. La programmation permet de faire varier la température suivant les périodes d'occupation de l'habitation.

Par exemple, on peut souhaiter une augmentation du débit de mazout le matin, juste avant le réveil, et le soir, juste avant le retour du travail. Alternativement, on peut souhaiter une diminution du débit, le soir après être allé se coucher, et en cas d'absence durant la journée. Ainsi, il est donc possible grâce au dispositif selon l'invention de disposer d'un confort d'utilisation accru, l'habitation se trouvant chauffée avant le retour de l'utilisateur ou avant le lever de celui-ci, tout en permettant une utilisation rationnelle de l'énergie, l'appareil fonctionnant au régime minimum ou à un régime réduit lorsqu'il n'y a personne dans la maison ou pendant la nuit.

La présente invention fournit les avantages suivants sur les appareils munis de thermostats "tout ou rien" à bulbe ou autres thermostats mécaniques tels que thermostat bilame ou à tension de vapeur :
- grande précision (de l'ordre du dixième de degré) et absence de dérive au cours du temps ;
- utilisation directe de la température d'ambiance mesurée au niveau du thermostat et non d'une mesure indirecte représentative plutôt de la température du poêle ;
- confort d'utilisation : plusieurs régimes programmables, intérêt en cas d'absence.

## Revendications

1. Dispositif de contrôle, commande et/ou programmation d'un appareil de chauffage à vaporisation de combustible liquide (1,2), dont le débit de l'arrivée dudit combustible est réglé via une cuve à niveau constant (6) muni d'un organe doseur de débit actionnable, ledit dispositif intégrant un thermostat, **caractérisé en ce que** le dispositif comprend des moyens (3,4,5) permettant à un utilisateur situé à distance dudit appareil de mesurer la température d'ambiance à cet endroit, commander et/ou programmer ledit appareil.

2. Dispositif de contrôle, commande et/ou programmation selon la revendication 1, **caractérisé en ce que** lesdits moyens (3,4,5) sont au moins partiellement portables.

3. Dispositif selon la revendication 1 ou 2, **caractérisé en ce que** le thermostat est un thermostat électronique couplé à un programmateur numérique également intégré au dispositif et capable d'imposer à l'appareil de chauffage différents régimes de fonctionnement en fonction d'une base de temps.

4. Dispositif selon l'une quelconque des revendications précédentes, **caractérisé en ce qu'**il comprend un boîtier-télécommande sans fil (3) muni d'un thermostat et d'un programmateur numérique.

5. Dispositif selon la revendication 4, **caractérisé en ce que** le boîtier-télécommande (3) comporte un affichage, de préférence à cristaux liquides ou électroluminescent, capable d'afficher des valeurs de température.

6. Dispositif selon la revendication 4 ou 5, **caractérisé en ce que** le boîtier-télécommande (3) comprend un transducteur émetteur d'ultrasons coopérant avec un transducteur récepteur d'ultrasons (4), intégré à l'appareil de chauffage et couplé à un moteur pas à pas (5), capable à son tour d'actionner l'organe doseur de la cuve à niveau constant (6).

7. Dispositif selon la revendication 4 ou 5, **caractérisé en ce que** le boîtier-télécommande (3) comprend un transducteur émetteur d'infrarouges coopérant avec un transducteur récepteur d'infrarouges (4), intégré à l'appareil de chauffage et couplé à un moteur pas à pas (5), capable à son tour d'actionner l'organe doseur de la cuve à niveau constant (6).

8. Appareil de chauffage à vaporisation de combustible liquide (1,2), dont le débit de l'arrivée de combustible est réglé via une cuve à niveau constant (6) muni d'un organe doseur actionnable, **caractérisé en ce qu'**il comporte un dispositif de contrôle, commande et/ou programmation selon l'une quelconque des revendications précédentes.
